# EUROPEAN PATENT APPLICATION

(11) **EP 2 413 641 A1**
(43) Date of publication of application: **01.02.2012**
(21) Application number: 10755925.4
(22) Date of filing: 16.03.2010
(51) Int. Cl.: H04W 52/22

(54) **TRANSMISSION POWER CONTROL APPARATUS AND TRANSMISSION POWER CONTROL METHOD**

(30) Priority: 23.03.2009 JP 2009070551
(71) Applicant: NTT DOCOMO, INC., Chiyoda-ku Tokyo 100-6150 (JP)
(72) Inventor: GOTO, Yoshikazu, Tokyo 100-6150 (JP); TAKAGI, Yukiko, Tokyo 100-6150 (JP); HANAKI, Akihito, Tokyo 100-6150 (JP)
(74) Representative: HOFFMANN EITLE
(86) International application number: PCT/JP2010/054445
(87) International publication number: WO 2010/110127

(57) **Abstract**

A radio base station (200) transmits TPC bits (+1) or TPC bits (-1) to a mobile station at predetermined time intervals in order to approximate the reception quality of a radio signal to a target reception SIR, said TPC bit (+1) increasing the transmission power of the radio signal just by a given step, and said TPC bit (-1) decreasing the transmission power of the radio signal just by a given step. The radio base station (200) is provided with: a TPC bit monitoring unit (211) which monitors whether the ratio of TPC bits (+1) transmitted in the predetermined period exceeds n %; and a TPC bit adjustment unit (213) which transmits the TPC bits (-1) consecutively Y times at the time intervals, when it is detected that the ratio has exceeded n %.

## Description

### TECHNICAL FIELD

The present invention relates to a transmission power control apparatus and a transmission power control method for transmitting an increase command to increase transmission power of a radio signal just by a given step, or for transmitting a decrease command to decrease the transmission power of the radio signal just by a given step to a transmitting apparatus of the radio signal, based on a measured quality value indicating measured reception quality of the radio signal.

### BACKGROUND ART

Heretofore, mobile communication systems such as a third-generation mobile communication systems widely use outer loop control and inner loop control to suppress an interference between different mobile stations or the like which execute communication at the same time (see Patent Document 1, for example). The outer loop control is to adjust a target reception SIR (a target quality value) based on quality of decoded reception data (such as an error rate obtained by a CRC determination), and the inner loop control is to compare a measured reception SIR (a measured quality value) obtained by measuring a received radio signal with the target reception SIR and to increase or decrease transmission power just by a given step.

Specifically, in the outer loop control, the target reception SIR is increased just by a given amount (Δup) when the CRC determination result of the reception data shows an error, and the target reception SIR is decreased just by a given amount (Δdown) when the CRC determination result of the reception data shows no error.

In the inner loop control, a transmission power control (TPC) bit (+1) for increasing the transmission power just by a given step (such as 1 dB) is transmitted at predetermined time intervals when the measured reception SIR is lower than the target reception SIR, and a transmission power control (TPC) bit (-1) for decreasing the transmission power just by the given step is transmitted at predetermined time intervals when the measured reception SIR is higher than the target reception SIR.

### PRIOR ART DOCUMENT

### PATENT DOCUMENT

Patent Document 1: Japanese Patent Application Publication No. 2006-254506 (pages 4 and 5, Figs. 9 to 11)

### SUMMERY OF THE INVENTION

### PROBLEMS TO BE SOLVED BY THE INVENTION

In recent years, methods of speeding up of a transmission rate including High Speed Downlink Packet Access (HSDPA), Enhanced Up Link (EUL) and the like defined by 3GPP have been implemented in mobile communication systems. These methods can offer a high speed packet communication channel but have the following problems.

Specifically, a high target reception SIR is necessary to offer the high speed packet communication channel at constant quality. For this reason, the TPC bit (+1) requesting the increase in the transmission power is transmitted to a mobile station in transmission power control for uplink. However, a difficult situation for a radio base station to obtain the measured reception SIR reaching the target reception SIR may occur even if the mobile station increases the transmission power. Such a situation is likely to occur particularly when a high target reception SIR is set to achieve high throughput.

To be more precise, when a propagation environment between the mobile station and the radio base station is not a single-path environment, i.e., is a multiple-path environment, there is a problem that an increase in transmission power (S) in the mobile station leads to an increase in interference power (I) as well and thereby does not contribute to the improvement in the measured reception SIR As a consequence, the mobile station continuously increases the transmission power so that the measured reception SIR can reach the target reception SIR, thereby incurring a sudden increase in RTWP (Received Total Wideband Power) and causing significant interferences with other mobile stations and the like.

Such a problem can be solved to a certain extent by restricting an upper limit of the target reception SIR. However, in this case, the upper limit value of the transmission power for the single path is also restricted. Hence there is another problem that a peak rate is reduced in the packet communication channel.

Accordingly, the present invention has been made in view of the aforementioned circumstances, and an objective thereof is to provide a transmission power control apparatus and a transmission power control method capable of effectively suppressing an interference between different mobile stations or the like while ensuring a peak rate in a high speed packet communication channel.

### MEANS FOR SOLVING THE PROBLEM

To solve the above problem, the present invention has following features. Fist, a first feature of the present invention is summarized as a transmission power control apparatus (radio base station 200) configured to transmit any of an increase command (TPC bit (+1)) and a decrease command (TPC bit (-1)) to a transmitting apparatus (mobile station 30(3A, for example) of a radio signal (radio signal RS) at predetermined time intervals (slots), based on a measured quality value (measured reception SIR) indicating measured reception quality (SIR) of the radio signal, in order to approximate the reception quality to a target quality value (target reception SIR), the increase command requesting to increase transmission power of the radio signal just by a given step (1dB, for example), the decrease command requesting to decrease the transmission power of the radio signal just by a given step, including: a command monitoring unit (TPC bit monitoring unit 211) configured to monitor whether or not a proportion of the increase commands transmitted in a predetermined period (m times) exceeds a predetermined value (n %); and a command adjustment unit (TPC bit adjustment unit 213) configured to transmit the decrease commands consecutively a plurality of times (Y times) at the predetermined time intervals when the command monitoring unit detects that the proportion exceeds the predetermined value.

A second feature of the present invention according to the first feature is summarized as that the command adjustment unit forcibly transmits the decrease commands consecutively a plurality of times when the measured quality value is below the target quality value.

A third feature of the present invention according to the first feature is summarized as that the command monitoring unit monitors whether or not the increase commands are consecutively transmitted a predetermined number of times (X times), and the command adjustment unit transmits the decrease commands consecutively a plurality of times when it is detected that the increase commands are consecutively transmitted the predetermined number of times.

A fourth feature of the present invention according to the first feature is summarized as the transmission power control apparatus further including: a target quality value setting unit configured to reduce the target quality value when the command monitoring unit detects that the proportion exceeds the predetermined value.

A fifth feature of the present invention according to the fourth feature is summarized as that the command monitoring unit monitors whether or not the increase commands are consecutively transmitted a predetermined number of times, and the target quality value setting unit reduces the target quality value when it is detected that the increase commands are consecutively transmitted the predetermined number of times.

A sixth feature of the present invention is summarized as a transmission power control method for transmitting any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, including the steps of: monitoring whether or not a proportion of the increase commands transmitted in a predetermined period exceeds a predetermined value; and transmitting the decrease commands consecutively a plurality of times at the predetermined time intervals when it is detected that the proportion exceeds the predetermined value in the monitoring step.

A seventh feature of the present invention is summarized as a transmission power control apparatus configured to transmit any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, including: a command monitoring unit (TPC bit monitoring unit 211A) configured to monitor whether or not a proportion of the increase commands transmitted in a predetermined period exceeds a predetermined value; and a target quality value setting unit (target SIR setting unit 205A) configured to reduce the target quality value when the command monitoring unit detects that the proportion exceeds the predetermined value.

An eighth feature of the present invention according to the seventh feature is summarized as that the command monitoring unit monitors whether or not the increase commands are consecutively transmitted a predetermined number of times, and the target quality value setting unit reduces the target quality value when it is detected that the increase commands are consecutively transmitted the predetermined number of times.

A ninth feature of the present invention according to the seventh feature is summarized as the transmission power control apparatus further including a path measurement unit (path measurement unit 215) configured to measure the number of paths included in a signal after combination of a delayed multipath component of the radio signal, wherein the target quality value setting unit changes a reduction amount of the target quality value based on the number of the paths measured by the path measurement unit.

A tenth feature of the present invention is summarized as a transmission power control method for transmitting any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, including the steps of: monitoring whether or not a proportion of the increase commands transmitted in a predetermined period exceeds a predetermined value; and reducing the target quality value when it is detected that the proportion exceeds the predetermined value in the monitoring step.

An eleventh feature of the present invention is summarized as a transmission power control apparatus configured to transmit any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, including: a command monitoring unit configured to monitor whether or not a proportion of the decrease commands transmitted in a predetermined period (a times) exceeds a predetermined value (b %); and a command adjustment unit configured to transmit the increase commands consecutively a plurality of times (Q times) at the predetermined time intervals when the command monitoring unit detects that the proportion exceeds the predetermined value.

A twelfth feature of the present invention according to the eleventh feature is summarized as that the command monitoring unit monitors whether or not the decrease commands are consecutively transmitted a predetermined number of times (P times), and the command adjustment unit transmits the increase commands consecutively a plurality of times when it is detected that the decrease commands are consecutively transmitted the predetermined number of times.

A thirteenth feature of the present invention is summarized as a transmission power control method for transmitting any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, including the steps of: monitoring whether or not a proportion of the decrease commands transmitted in a predetermined period exceeds a predetermined value; and transmitting the increase commands consecutively a plurality of times at the predetermined time intervals when it is detected that the proportion exceeds the predetermined value in the monitoring step.

### EFFECTS OF THE INVENTION

According to the characteristic features of the present invention, it is possible to provide a transmission power control apparatus and a transmission power control method capable of effectively suppressing an interference between different mobile stations or the like while ensuring a peak rate in a high speed packet communication channel.

### BRIEF DESCRIPTION OF THE DRAWINGS

[Fig. 1] Fig. 1 is an overall schematic configuration diagram of a mobile communication system 10 according to an embodiment of the present invention.
[Fig. 2] Fig. 2 is a functional block diagram of a radio base station 200 according to a first embodiment of the present invention.
[Fig. 3] Fig. 3 is a view showing an operation flow of the radio base station 200 according to the first embodiment of the present invention.
[Fig. 4] Fig. 4 is a view showing an example of a transmission state of TPC bits according to the first embodiment of the present invention.
[Fig. 5] Fig. 5 is a view showing an example of a transmission state of TPC bits according to a modified example of the first embodiment of the present invention.
[Fig. 6] Fig. 6 is an explanatory view of a situation where a mobile station 300A continuously increases transmission power in the case of a multiple-path environment.
[Fig. 7] Fig. 7 is an explanatory view of a situation where a mobile station 300A continuously increases transmission power in the case of a single-path environment.
[Fig. 8] Fig. 8 is a functional block diagram of a radio base station 200A according to a second embodiment of the present invention.
[Fig. 9] Fig. 9 is a view showing an operation flow of the radio base station 200A according to the second embodiment of the present invention.
[Fig. 10] Fig. 10 is a view showing transition of a target reception SIR and a transmission state of TPC bits according to the second embodiment of the present invention.
[Fig. 11] Fig. 11 is a functional block diagram of a radio base station 200B according to a third embodiment of the present invention.
[Fig. 12] Fig. 12 is a view showing an operation flow of the radio base station 200B according to the third embodiment of the present invention.

### MODES FOR CARRYING OUT THE INVENTION

Next, embodiments of the present invention will be described. To be more precise, first to third embodiments of the present invention and other embodiments will be described.

Note that, in the following description of the drawings, same or similar reference numerals denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### [First Embodiment]

In a first embodiment, (1) Overall Schematic Configuration of Mobile Communication System, (2) Functional Block Configuration of Transmission Power Control Apparatus, (3) Operation of Transmission Power Control Apparatus, (4) Modified Example, and (5) Advantageous Effect will be described.

### (1) Overall Schematic Configuration of Mobile Communication System

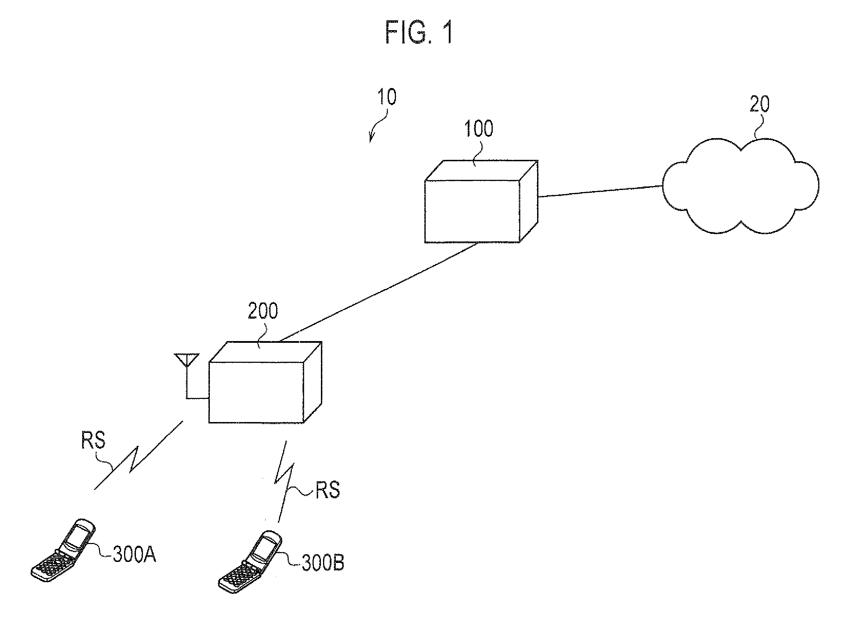

Fig. 1 is an overall schematic configuration diagram of a mobile communication system 10 according to this embodiment. As shown in Fig. 1, the mobile communication system 10 includes a radio network controller 100 (hereinafter a RNC 100), a radio base station 200, and mobile stations 300A and 300B. Here, the numbers of the radio base stations and the mobile stations included in the mobile communication system 10 are not limited to the numbers illustrated in Fig. 1.

The RNC 100 is connected to a communication network 20. Other communication networks (a fixed telephone network and the Internet, for example) are connected to the communication network 20.

The radio base station 200 transmits and receives radio signals RS to and from the mobile stations 300A and 300B. Meanwhile, the radio base station 200 is connected to the RNC 100.

The mobile communication system 10 adopts a radio communication mode defined by the 3rd Generation Partnership Project (3GPP), namely, the W-CDMA mode. Meanwhile, High Speed Downlink Packet Access (HSDPA) with an improved transmission rate and Enhanced UpLink (EUL) are introduced to the mobile communication system 10.

Moreover, transmission power control in uplink direction and downlink direction is used in the mobile communication system 10. Particularly, both of inner loop control configured to be executed between the radio base station 200 and the mobile station 300A (300B) and outer loop control configured to cause the RNC 100 to adjust a target reception SIR (a target quality value) based on quality (such as an error rate obtained by CRC determination) of decoded reception data and to notify the radio base station 200 of the target reception SIR are used for the uplink direction. Meanwhile, in the case of the outer loop control in the EUL, the outer loop control may be adopted between the radio base station 200 and the mobile station 300A (300B) instead of between the RNC 100 and the mobile station 300A (300B).

In the inner loop control, a TPC bit (+1) (an increase command) for increasing transmission power of a radio signal RS just by a given step (such as 1 dB) is transmitted at predetermined time intervals (such as slots) to a transmitting apparatus (such as the mobile station 300A) of the radio signal RS, based on a measured reception SIR (a measured quality value) indicating measured reception quality (namely, an SIR) of the radio signal RS, in order to approximate the reception quality to a target reception SIR. Alternatively, a TPC bit (-1) (a decrease command) for decreasing the transmission power of the radio signal RS just by the given step is transmitted at the predetermined time intervals to the transmitting apparatus of the radio signal RS, based on the measured reception SIR.

### (2) Functional Block Configuration of Transmission Power Control Apparatus

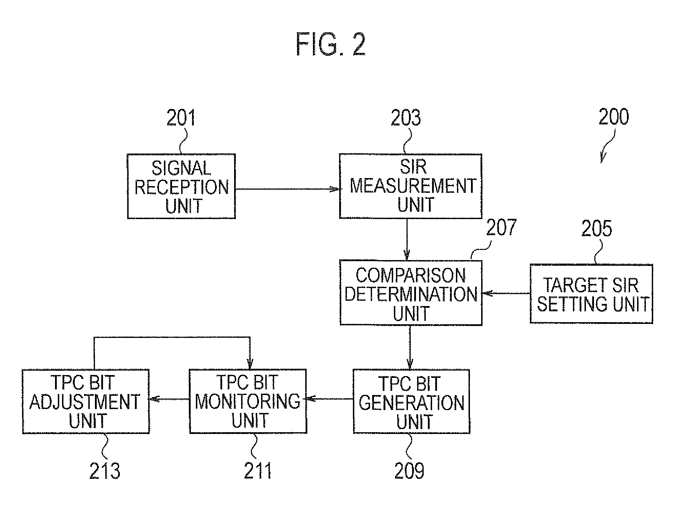

Fig. 2 is a functional block diagram of the radio base station 200 constituting the transmission power control apparatus in this embodiment.

As shown in Fig. 2, the radio base station 200 includes a signal reception unit 201, an SIR measurement unit 203, a target SIR setting unit 205, a comparison determination unit 207, a TPC bit generation unit 209, a TPC bit monitoring unit 211, and a TPC bit adjustment unit 213. Here, portions related to the present invention will be mainly described below. Therefore, it is to be noted that the radio base station 200 may include blocks (such as a power supply unit) which are omitted or not illustrated to be explained but are essential for realizing functions as the radio base station 200.

The signal reception unit 201 receives the radio signal RS from the mobile station 300A (300B), and executes demodulation using the received radio signal RS and combination (RAKE combination) of a delayed multipath component of the radio signal RS.

The SIR measurement unit 203 periodically measures a signal power to interference power ratio (SIR) of a signal outputted from the signal reception unit 201, and outputs the measured SIR as the measured reception SIR to the comparison determination unit 207.

The target SIR setting unit 205 acquires the target reception SIR notified from the RNC 100 and sets the acquired target reception SIR.

The comparison determination unit 207 compares the measured reception SIR outputted from the SIR measurement unit 203 with the target reception SIR set by the target SIR setting unit 205. As a result of the comparison, the comparison determination unit 207 determines which one of the measured reception SIR and the target reception SIR is higher (or lower).

The TPC bit generation unit 209 generates the TPC bit (+1) for increasing the transmission power of the radio signal RS transmitted by the mobile station 300A (300B) just by the given step, or the TPC bit (-1) for decreasing the transmission power of the radio signal RS just by the given step, based on a result of determination by the comparison determination unit 207.

To be more precise, the TPC bit generation unit 209 generates the TPC bit (+1) when the measured reception SIR is lower than the target reception SIR. On the other hand, the TPC bit generation unit 209 generates the TPC bit (-1) when the measured reception SIR is higher than the target reception SIR.

The TPC bit monitoring unit 211 monitors the type of the TPC bit (+1 or -1) which is generated by the TPC bit generation unit 209 and mapped in a control channel on a transmission side. However, the TPC bit monitoring unit 211 stops the monitoring operation if a transmission power forcible decrease flag to be described later is ON by the TPC bit adjustment unit 213.

In this embodiment, the TPC bit monitoring unit 211 monitors whether or not the TPC bits (+1) are consecutively transmitted X times since the state of the measured reception SIR being lower than the target reception SIR continues consecutively X times as a result of periodic measurements by the SIR measurement unit 203. In this embodiment, the TPC bit monitoring unit 211 constitutes a command monitoring unit.

Meanwhile, the TPC bit monitoring unit 211 can monitor whether or not a proportion of the TPC bits (+1) transmitted during a TPC bit transmission period of m times exceeds n % due to occurrence of the state of the measured reception SIR being lower than the target reception SIR.

When the TPC bit monitoring unit 211 detects that the TPC bits (+1) are consecutively transmitted X times or that the above-described proportion exceeds n%, the TPC bit adjustment unit 213 adjust the type of the TPC bit to be mapped in the control channel on the transmission side.

To be more precise, the TPC bit adjustment unit 213 transmits the TPC bits (-1) consecutively multiple times (Y times) at predetermined time intervals (slots). In this embodiment, the TPC bit adjustment unit 213 constitutes a command adjustment unit.

When the TPC bit monitoring unit 211 detects that the TPC bits (+1) are consecutively transmitted X times (or the fact that the above-described proportion exceeds n %), the TPC bit adjustment unit 213 forcibly transmits the TPC bits (-1) consecutively multiple times even if the measured reception SIR does not reach the target reception SIR. That is, the TPC bit adjustment unit 213 transmits the TPC bits (-1) consecutively the multiple times when the TPC bits (+1) have already been transmitted consecutively X times even if the TPC bits (+1) are generated by the TPC bits generation unit 209 due to the occurrence of the state of the measured reception SIR being lower than the target reception SIR.

Moreover, the TPC bit adjustment unit 213 sets the "transmission power forcible decrease flag" at ON while forcibly transmitting the TPC bits (-1).

### (3) Operation of Transmission Power Control Apparatus

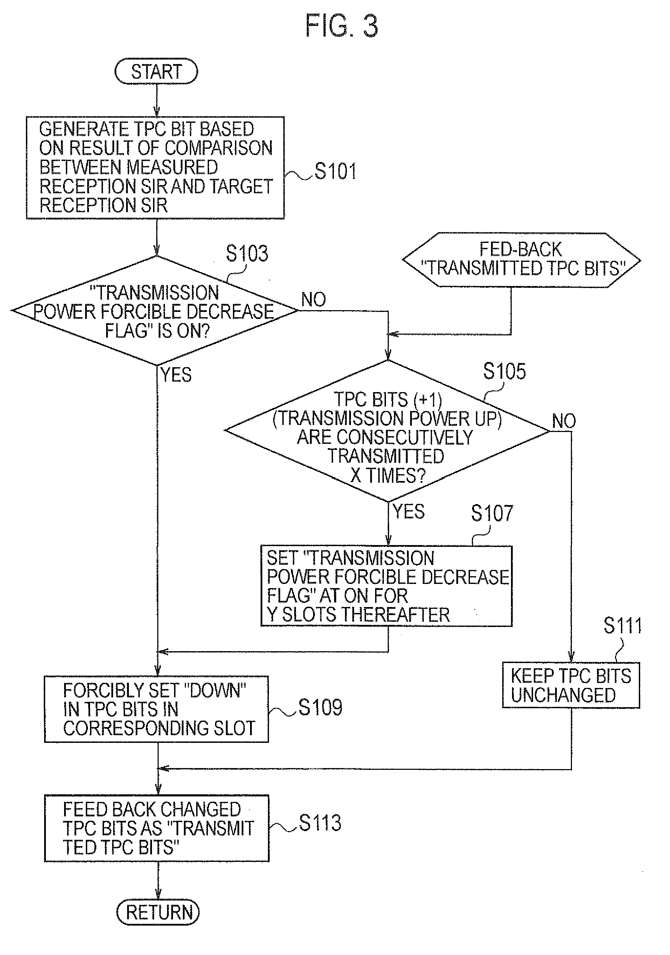

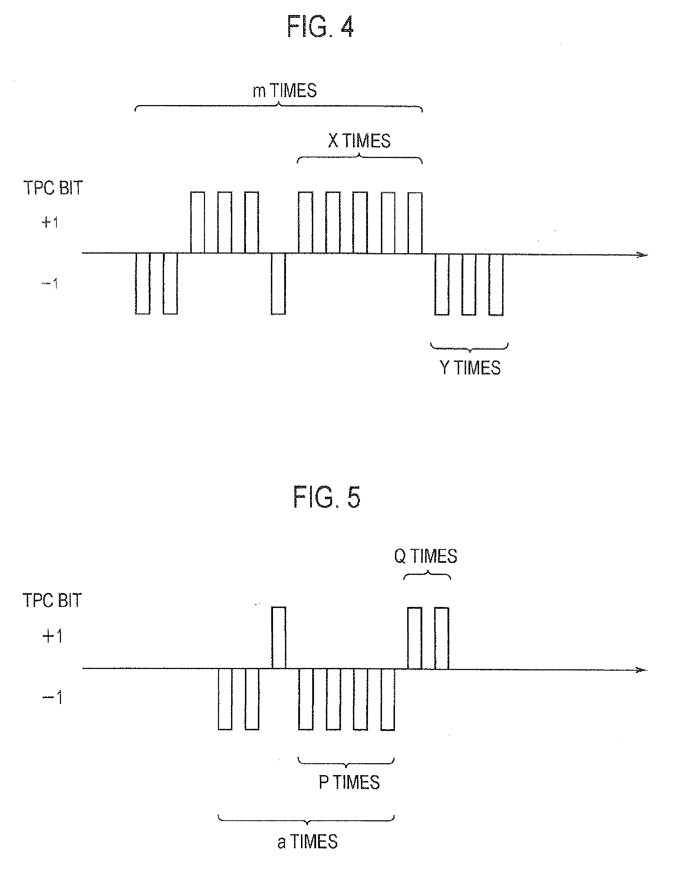

Fig. 3 is a view showing an operation flow of the radio base station 200 (transmission power control apparatus) according to this embodiment. In addition, Fig. 4 is a view showing an example of a transmission state of TPC bits according to this embodiment. In this embodiment, when the TPC bits (+1) are consecutively transmitted X times, the TPC bits (-1) are forcibly transmitted the multiple times as described above.

As shown in Fig. 3, in step S101, the radio base station 200 generates the TPC bit based on the result of comparison between the measured reception SIR and the target reception SIR.

In step S103, the radio base station 200 determines whether or not the transmission power forcible decrease flag is set at ON.

When the transmission power forcible decrease flag is set at OFF (No in step S103), in step S105, the radio base station 200 determines whether or not the TPC bits (+1) are consecutively transmitted X times based on "transmitted TPC bits" fed back from the TPC bit adjustment unit 213 in accordance with a transmission result of the TPC bits.

When the TPC bits (+1) are consecutively transmitted X times (Yes in step S105), in step S107, the radio base station 200 sets the transmission power forcible decrease flag at ON for Y slots after the determination that the TPC bits (+1) are consecutively transmitted X times.

When the transmission power forcible decrease flag is ON, in step S109, the radio base station 200 forcibly sets "down" in the TPC bits in the slot generated by the TPC bit generation unit 209. As a consequence, the TPC bits (-1) are consecutively transmitted Y times.

When the TPC bits (+1) are not consecutively transmitted X times (No in step S105), in step S111, the radio base station 200 determines to keep the TPC bits unchanged. As a consequence, the TPC bits generated by the TPC bit generation unit 209 are transmitted without any change.

In step S113, the radio base station 200 feeds back the transmitted TPC bits as the "transmitted TPC bits". The TPC bits thus fed back are referred to in the processing of step S105 in a subsequent session.

Here, in the operational flow shown in Fig. 3, the TPC bits (-1) are consecutively transmitted Y times when the TPC bits (+1) are consecutively transmitted X times. Instead, the TPC bits (-1) may be transmitted consecutively when the proportion of the TPC bits (+1) transmitted in a TPC bit transmission period of m times exceeds n%.

### (4) Modified Example

Next, a modified example according to this embodiment will be described. Fig. 5 shows an example of a transmission state of TPC bits according to this modified example.

In this modified example, the TPC bit monitoring unit 211 monitors whether or not a proportion of the TPC bits (-1) transmitted in a TPC bit transmission period of a times exceeds b %. That is, in this modified example, the TPC bit monitoring unit 211 monitors the proportion of transmission of the TPC bits (-1) instead of the TPC bits (+1). Meanwhile, the TPC bit monitoring unit 211 can also monitor whether or not the TPC bits (-1) are consecutively transmitted P times.

When the TPC bit monitoring unit 211 detects that the above-described proportion exceeds b %, the TPC bit adjustment unit 213 according to this modified example consecutively transmits the TPC bits (+1) Q times at predetermined time intervals (slots). Alternatively, the TPC bit adjustment unit 213 may consecutively transmit the TPC bits (+1) Q times when the TPC bit monitoring unit 211 detects that the TPC bits (-1) are consecutively transmitted P times.

The operation according to this modified example is preferably used together with the operation shown in Fig. 3. Nevertheless, it is also possible to execute the operation according to this modified example alone. Meanwhile, when using the operation shown in Fig. 3 together, the parameters P times, Q times, a times, and b % are preferably different from X times, Y times, m times, and n % described above.

That is, when the TPC bits (-1) are consecutively transmitted, there may be a case where the reception quality of the radio signal RS is deteriorated more than expected. When BLER drops, the target reception SIR is increased by the outer loop control. As a consequence, a period for transmitting the TPC bits (+1) is extended if a period in which the target reception SIR is higher than the measured reception SIR continues, thereby causing rapid fluctuation in RTWP (received total wideband power). According to the operation of this modified example, it is possible to suppress consecutive transmission of the TPC bits (-1) and to avoid the rapid fluctuation in the RTWP.

### (5) Advantageous Effect

According to the radio base station 200 constituting the transmission power control apparatus in this embodiment, the TPC bits (-1) are consecutively transmitted Y times when the TPC bits (+1) are consecutively transmitted X times since the state of the measured reception SIR being lower than the target reception SIR continues consecutively X times.

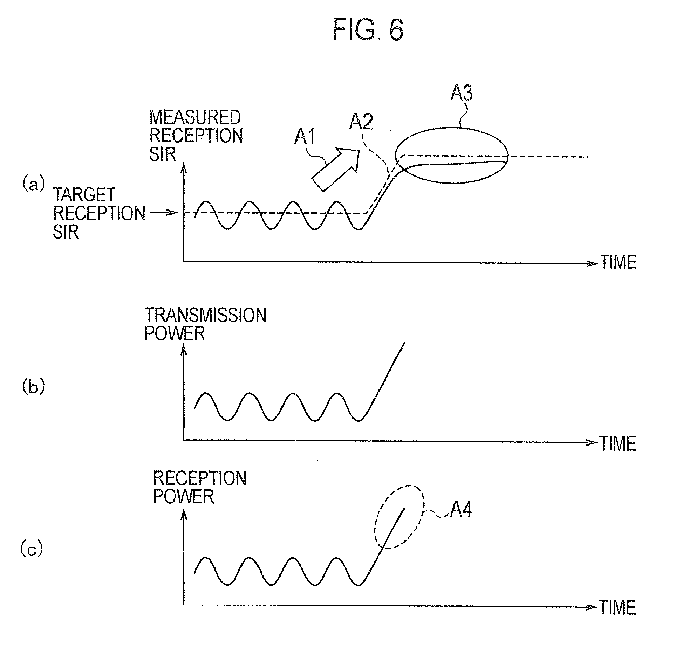

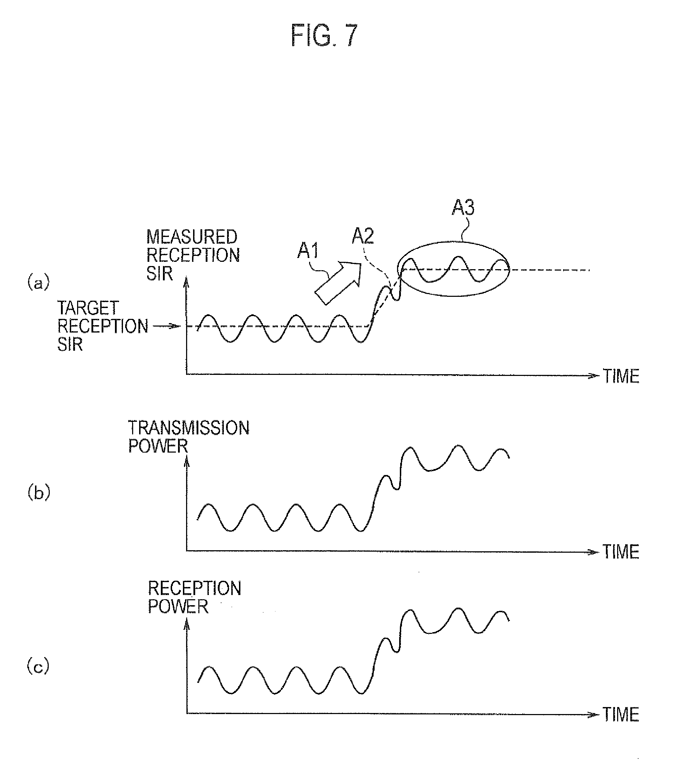

Figs. 6a to 6c are explanatory views of a situation where the mobile station 300A continuously increases the transmission power in the case of a multiple-path environment. Meanwhile, Figs. 7a to 7c show a case of a single-path environment for the purpose of comparison.

As shown in Fig. 6a and Fig. 7a, if a high speed packet communication channel is set (at a portion A1), an error rate of decoded reception data is increased due to a low target reception SIR. Accordingly, a high target reception SIR is set (at a portion A2) in the outer loop control. In the usual case (the single-path environment), even if the target reception SIR is increased along with the setting of the high speed packet communication channel, the measured reception SIR can follow the target reception SIR. Hence there are no significant increases in the transmission power and the reception power (see Figs. 7b and 7c).

On the other hand, in the case of the multiple-path environment, if the mobile station 300A increases the transmission power (S), the interference power (I) also increases in the same way and the measured reception SIR at the radio base station 200 does not improve. For this reason, the mobile station 300A continuously increases the transmission power as shown in Fig. 6b until the measured reception SIR reaches the target reception SIR. If the mobile station 300A continuously increases the transmission power, the reception power at the radio base station 200 or the like becomes extremely large as shown in Fig. 6(c) (a portion A4 in Fig. 6(c)).

Even in this case, this embodiment can avoid a state of causing a significant interference between different mobile stations or the like. Accordingly, it is possible to effectively suppress an interference between different mobile stations or the like while ensuring a peak rate in the high speed packet communication channel.

Moreover, according to this embodiment, even if the situation occurs where the measured reception SIR is lower than the target reception SIR and the TPC bits (+1) are generated by the TPC bit generation unit 209, the TPC bits (-1) are consecutively transmitted the multiple times (Y times) by the TPC bit adjustment unit 213 when the TPC bits (+1) have already been consecutively transmitted X times. Hence it is possible to avoid the aforementioned problem while adhering to the existing transmission power control (the inner loop control).

### [Second Embodiment]

Next, a second embodiment of the present invention will be described. In this embodiment, when a predetermined condition is met, the target reception SIR is reduced instead of transmitting the TPC bits (-1) consecutively multiple times. In the following, portions different from those in the above-described first embodiment will be mainly explained while description of similar portions will be omitted as appropriate.

### (1) Functional Block Configuration of Transmission Power Control Apparatus

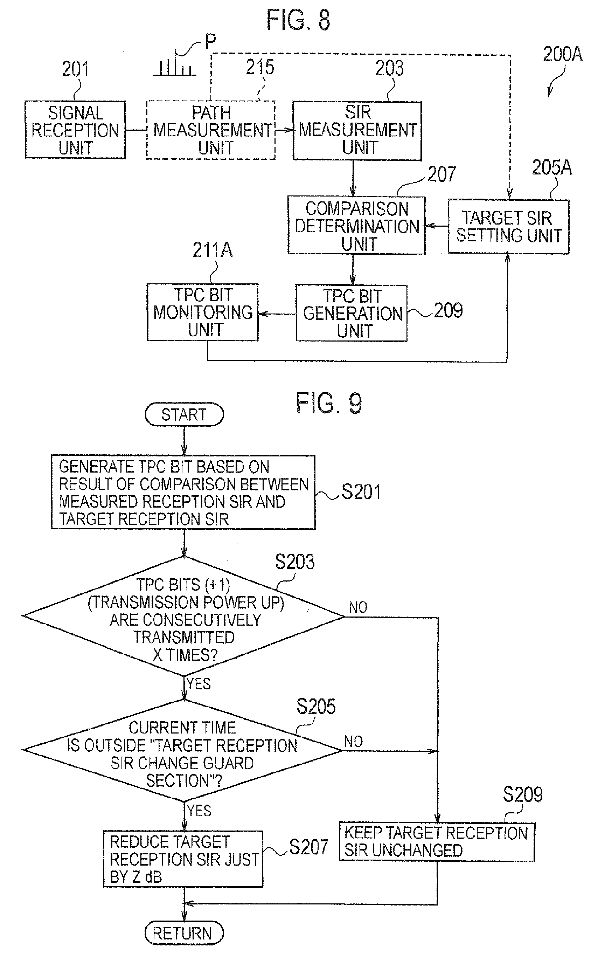

Fig. 8 is a functional block diagram of a radio base station 200A constituting a transmission power control apparatus according to this embodiment.

Comparing to the radio base station 200 according to the first embodiment, the radio base station 200A includes a target SIR setting unit 205A and a TPC bit monitoring unit 211 having different functions. Meanwhile, the TPC bit adjustment unit 213 included in the radio base station 200 is not included in the radio base station 200A.

The TPC bit monitoring unit 211A notifies the target SIR setting unit 205A of a monitoring result of the TPC bits which are generated by the TPC bit generation unit 209 and are mapped in the control channel on the transmission side.

The target SIR setting unit 205A reduces the target reception SIR when the TPC bit monitoring unit 211A detects that the TPC bits (+1) are consecutively transmitted X times or that that the proportion of the TPC bits (+1) transmitted in the predetermined period exceeds n %. In this embodiment, the target SIR setting unit 205A constitutes a target quality value setting unit.

To be more precise, the target SIR setting unit 205A reduces the target reception SIR just by Z dB (or a true value). Moreover, if the target reception SIR is reduced by Z dB, the target SIR setting unit 205A sets a "target reception SIR change card section" for cancelling the change in the target reception SIR for a predetermined period.

### (2) Operation of Transmission Power Control Apparatus

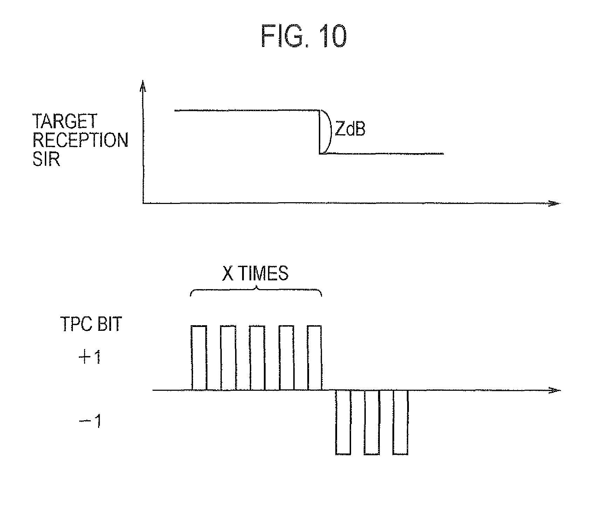

Fig. 9 is a view showing an operation flow of the radio base station 200A (transmission power control apparatus) according to this embodiment. In addition, Fig. 10 is a view showing transition of a target reception SIR and a transmission state of TPC bits according to this embodiment.

Steps S201 and S203 shown in Fig. 9 are similar to steps S101 and S103 according to the first embodiment.

When the TPC bits (+1) are consecutively transmitted X times (Yes in step S203), in step S205, the radio base station 200A determines whether or not the current time is outside the "target reception SIR change guard section" for cancelling the change in the target reception SIR.

When the current time is outside the target reception SIR change card section (Yes in step S205), the radio base station 200A reduces the target reception SIR just by Z dB (such as 3 dB) in step S207.

On the other hand, when the TPC bits (+1) are not consecutively transmitted X times (No in step S203) and when the current time is inside the target reception SIR change card section (No in step S205), the radio base station 200A does not change the target reception SIR and maintains the set target reception SIR in step S209.

### (3) Modified Example

Next, a modified example according to this embodiment will be described. As shown in Fig. 8, the radio base station 200A may include a path measurement unit 215.

The path measurement unit 215 measures the number of paths P included in the signal outputted from the signal reception unit 201, namely, the signal after the RAKE combination of the delayed multipath component of the radio signal RS.

The target SIR setting unit 205A changes a reduction amount of the target reception SIR based on the number of paths measured by the path measurement unit 215. To be more precise, the target SIR setting unit 205A increases the reduction amount of the target reception SIR when the number of the measured paths is higher.

### (4) Advantageous Effect

According to the radio base station 200A constituting the transmission power control apparatus of this embodiment, the target reception SIR is reduced just by Z dB when the TPC bits (+1) are consecutively transmitted X times. For this reason, even in the multiple-path environment, it is possible to avoid a situation where a significant interference between different mobile stations or the like occurs due to an increase in the transmission power. Specifically, according to the radio base station 200A, it is possible to effectively suppress the interference between different mobile stations or the like while ensuring the peak rate in the high speed packet communication channel.

Moreover, in this embodiment, it is also possible to change the reduction amount of the target reception SIR based on the number of the paths measured by the path measurement unit 215. For this reason, it is possible to promptly set the appropriate reduction amount of the target reception SIR based on a propagation environment.

### [Third Embodiment]

Next, a third embodiment of the present invention will be described. In this embodiment, the target reception SIR is changed based on the number of paths included in a signal after combination of a delayed multipath component of a radio signal. In the following, portions different from those in the above-described first embodiment will be mainly explained while description of similar portions will be omitted as appropriate.

### (1) Functional Block Configuration of Transmission Power Control Apparatus

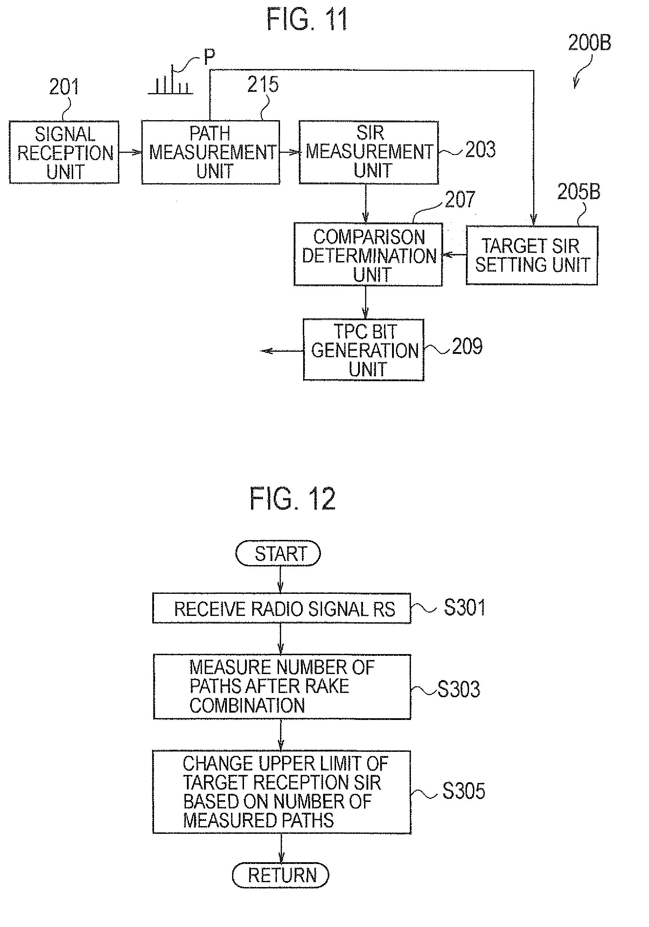

Fig. 11 is a functional block diagram of a radio base station 200B constituting a transmission power control apparatus according to this embodiment.

As compared to the radio base station 200 according to the first embodiment, the radio base station 200B includes a path measurement unit 215, and a target SIR setting unit 205B having different functions. Meanwhile, the TPC bit monitoring unit 211 and the TPC bit adjustment unit 213 included in the radio base station 200 is not included in the radio base station 200B.

The path measurement unit 215 measures the number of paths P included in the signal after the RAKE combination of the delayed multipath component of the radio signal RS.

The target SIR setting unit 205B changes either the target reception SIR or an upper limit of the target reception SIR, based on the number of paths measured by the path measurement unit 215. In this embodiment, the target SIR setting unit 205B constitutes the target quality value setting unit.

To be more precise, the target SIR setting unit 205B reduces either the target reception SIR or the upper limit of the target reception SIR when the number of paths measured by the path measurement unit 215 is greater than a given number. Meanwhile, the target SIR setting unit 205B may be configured to reduce either the target reception SIR or the upper limit of the target reception SIR gradually along with the increase in the number of paths measured by the path measurement unit 215.

That is, when the propagation environment is in the multiple-path environment, the target SIR setting unit 205B reduces the target reception SIR because if the transmission power (S) increases, the interference power (I) also increases in the same way and thereby the measured reception SIR hardly reaches the target reception SIR.

### (2) Operation of Transmission Power Control Apparatus

Fig. 12 is a view showing an operation flow of the radio base station 200B (transmission power control apparatus) according to this embodiment.

As shown in Fig. 12, in step S301, the radio base station 200B receives the radio signal RS.

In step S303, the radio base station 200B measures the number of the paths P included in the signal after the RAKE combination.

In step S305, the radio base station 200B changes the upper limit of the target reception SIR based on the number of the measured paths. To be more precise, the target SIR setting unit 205B reduces the target reception SIR when the number of the measured paths is greater than the given number.

### (3) Advantageous Effect

According to the radio base station 200B constituting the transmission power control apparatus in this embodiment, the upper limit of the target reception SIR is changed base on the number of the measured paths. For this reason, even in the multiple-path environment, it is possible to avoid a situation where a significant interference between different mobile stations or the like occurs due to an increase in the transmission power. Specifically, the radio base station 200A makes it possible to effectively suppress the interference between different mobile stations or the like while ensuring the peak rate in the high speed packet communication channel.

### [Other Embodiments]

As described above, the details of the present invention have been disclosed by using the first to third embodiments of the present invention. However, it should not be understood that the description and drawings which constitute part of this disclosure limit the present invention. From this disclosure, various alternative embodiments will be easily found by those skilled in the art.

For example, although the SIR is used as the reception quality of the radio signal RS in the above-described embodiments, it is also possible to use other reception quality factors (such as a CIR).

Meanwhile, the transmission power control method according to the first embodiment and the transmission power control method according to the second embodiment described above can be used together. According to the transmission power control method of the first embodiment, the transmission power (and the reception power) is decreased by forcibly transmitting the TPC bits (-1) under a certain condition. Therefore, the quality of the decoded received data tends to deteriorate and the error rate being monitored in the outer loop control deteriorates.

In the outer loop control, the target reception SIR is set higher when the error rate being monitored is worse than a targeted error rate. Hence the target reception SIR tends to become higher than the measured reception SIR in comparison between the target reception SIR and the measured reception SIR in the inner loop control. Therefore, the TPC bits (+1) are transmitted whereby the transmission power tends to increase. Accordingly, by using the transmission power control method of the second embodiment together, it is possible to reduce the target reception SIR as well, and to reliably prevent the target reception SIR from becoming higher than the measured reception SIR in comparison between the target reception SIR and the measured reception SIR in the inner loop control.

In the above-described embodiments, the mobile communication system 10 adopts the W-CDMA mode. However, the communication mode is not limited only to the W-CDMA mode and other modes are also applicable.

As described above, the present invention naturally includes various embodiments which are not described herein. Accordingly, the technical scope of the present invention should be determined only by the matters to define the invention in the scope of claims regarded as appropriate based on the description. Note that the entire content of Japanese Patent Application No. 2009-070551 (filed on March 23, 2009) is incorporated herein by reference.

### INDUSTRIAL APPLICABILITY

As described above, according to the transmission power control apparatus and the transmission power control method of the present invention, it is possible to provide a transmission power control apparatus and a transmission power control method capable of effectively suppressing an interference between different mobile stations or the like while ensuring a peak rate in a high speed packet communication channel.

## Claims

1. A transmission power control apparatus configured to transmit any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, comprising:
a command monitoring unit configured to monitor whether or not a proportion of the increase commands transmitted in a predetermined period exceeds a predetermined value; and
a command adjustment unit configured to transmit the decrease commands consecutively a plurality of times at the predetermined time intervals when the command monitoring unit detects that the proportion exceeds the predetermined value.

2. The transmission power control apparatus according to claim 1, wherein
the command adjustment unit forcibly transmits the decrease commands consecutively a plurality of times when the measured quality value is below the target quality value.

3. The transmission power control apparatus according to claim 1, wherein
the command monitoring unit monitors whether or not the increase commands are consecutively transmitted a predetermined number of times, and
the command adjustment unit transmits the decrease commands consecutively a plurality of times when it is detected that the increase commands are consecutively transmitted the predetermined number of times.

4. The transmission power control apparatus according to claim 1, further comprising:
a target quality value setting unit configured to reduce the target quality value when the command monitoring unit detects that the proportion exceeds the predetermined value.

5. The transmission power control apparatus according to claim 4, wherein
the command monitoring unit monitors whether or not the increase commands are consecutively transmitted a predetermined number of times, and
the target quality value setting unit reduces the target quality value when it is detected that the increase commands are consecutively transmitted the predetermined number of times.

6. A transmission power control method for transmitting any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, comprising the steps of:
monitoring whether or not a proportion of the increase commands transmitted in a predetermined period exceeds a predetermined value; and
transmitting the decrease commands consecutively a plurality of times at the predetermined time intervals when it is detected that the proportion exceeds the predetermined value in the monitoring step.

7. A transmission power control apparatus configured to transmit any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, comprising:
a command monitoring unit configured to monitor whether or not a proportion of the increase commands transmitted in a predetermined period exceeds a predetermined value; and
a target quality value setting unit configured to reduce the target quality value when the command monitoring unit detects that the proportion exceeds the predetermined value.

8. The transmission power control apparatus according to claim 7, wherein
the command monitoring unit monitors whether or not the increase commands are consecutively transmitted a predetermined number of times, and
the target quality value setting unit reduces the target quality value when it is detected that the increase commands are consecutively transmitted the predetermined number of times.

9. The transmission power control apparatus according to claim 7, further comprising:
a path measurement unit configured to measure the number of paths included in a signal after combination of a delayed multipath component of the radio signal, wherein
the target quality value setting unit changes a reduction amount of the target quality value based on the number of the paths measured by the path measurement unit.

10. A transmission power control method for transmitting any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, comprising the steps of:
monitoring whether or not a proportion of the increase commands transmitted in a predetermined period exceeds a predetermined value; and
reducing the target quality value when it is detected that the proportion exceeds the predetermined value in the monitoring step.

11. A transmission power control apparatus configured to transmit any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, comprising:
a command monitoring unit configured to monitor whether or not a proportion of the decrease commands transmitted in a predetermined period exceeds a predetermined value; and
a command adjustment unit configured to transmit the increase commands consecutively a plurality of times at the predetermined time intervals when the command monitoring unit detects that the proportion exceeds the predetermined value.

12. The transmission power control apparatus according to claim 11, wherein
the command monitoring unit monitors whether or not the decrease commands are consecutively transmitted a predetermined number of times, and
the command adjustment unit transmits the increase commands consecutively a plurality of times when it is detected that the decrease commands are consecutively transmitted the predetermined number of times.

13. A transmission power control method for transmitting any of an increase command and a decrease command to a transmitting apparatus of a radio signal at predetermined time intervals, based on a measured quality value indicating measured reception quality of the radio signal, in order to approximate the reception quality to a target quality value, the increase command requesting to increase transmission power of the radio signal just by a given step, the decrease command requesting to decrease the transmission power of the radio signal just by a given step, comprising the steps of:
monitoring whether or not a proportion of the decrease commands transmitted in a predetermined period exceeds a predetermined value; and
transmitting the increase commands consecutively a plurality of times at the predetermined time intervals when it is detected that the proportion exceeds the predetermined value in the monitoring step.
